# EUROPEAN PATENT APPLICATION

(11) **EP 4 654 540 A1**
(43) Date of publication of application: **26.11.2025**
(21) Application number: 24752685.8
(22) Date of filing: 22.01.2024
(51) Int. Cl.: H04L 41/06

(54) **DATA STREAM IDENTIFICATION METHOD, APPARATUS AND ELECTRONIC DEVICE**

(30) Priority: 07.02.2023 CN 202310129577
(71) Applicant: Huawei Technologies Co., Ltd., Shenzhen, Guangdong 518129 (CN)
(72) Inventor: SHI, Danian, Shenzhen, Guangdong 518129 (CN); XIE, Yuming, Shenzhen, Guangdong 518129 (CN); ZHANG, Liang, Shenzhen, Guangdong 518129 (CN); WANG, Jun, Shenzhen, Guangdong 518129 (CN); HOU, Yanxiang, Shenzhen, Guangdong 518129 (CN)
(74) Representative: Goddar, Heinz J.
(86) International application number: PCT/CN2024/073409
(87) International publication number: WO 2024/164828

(57) **Abstract**

A data flow identification method and apparatus and an electronic device are disclosed. The method includes: obtaining a fingerprint feature and setup time of a first data flow; and determining, based on the fingerprint feature and the setup time of the first data flow, at least one data flow NAT-associated with the first data flow.

## Description

This application claims priority to Chinese Patent Application No. 202310129577.1, filed on February 7, 2023 and entitled "DATA FLOW IDENTIFICATION METHOD AND APPARATUS AND ELECTRONIC DEVICE", which is incorporated herein by reference in its entirety.

### TECHNICAL FIELD

This application relates to the field of network technologies, and in particular, to a data flow identification method and apparatus and an electronic device.

### BACKGROUND

Network address translation (network address translation, NAT) is used to perform translation between an internal private network address and a public internet protocol (internet protocol, IP) address. A network fault analyzer usually detects transmission quality of a data flow in transmission based on a 5-tuple of the data flow, to perform fault diagnosis. If a NAT device is involved in transmission of a data flow, a 5-tuple of the data flow before and after translation of the NAT device changes. As a result, the network fault analyzer cannot accurately and precisely demarcate a fault range. For example, the network fault analyzer can only determine a range from the NAT device to a destination end or from a source end to the NAT device as a fault range.

In a related technology, NAT session table information of a device on which a NAT function is enabled (briefly referred to as a NAT device below) may be read, a correspondence between two data flows before and after NAT is obtained based on the NAT session table information, and a data flow belonging to a same NAT session as a data flow is determined based on the correspondence between the data flows, so that the data flows belonging to the same NAT session can be considered during fault diagnosis.

However, NAT devices of different vendors and models export NAT session tables in different ways. In the foregoing solution, NAT devices need to be interconnected one by one, and even some NAT devices do not have existing management interfaces to obtain NAT session tables, which is difficult and costly to implement. In addition, deployment information of NAT devices in a network needs to be obtained in advance, so that NAT session table information can be read from the NAT devices; and the deployment information needs to be updated synchronously when deployment of the NAT devices changes, which is difficult to deploy.

### SUMMARY

This application provides a data flow identification method and apparatus and an electronic device, to reduce implementation difficulty and costs of determining a data flow NAT-associated with a first data flow, and reduce network deployment difficulty.

According to a first aspect, this application provides a data flow identification method. The method includes: obtaining a fingerprint feature and setup time of a first data flow; and determining, based on the fingerprint feature and the setup time of the first data flow, at least one data flow NAT-associated with the first data flow.

In this implementation, the at least one data flow NAT-associated with the first data flow is determined by using the fingerprint feature of the first data flow, and a session table does not need to be read from a NAT device. Therefore, implementation difficulty and costs are low, and network deployment difficulty is low.

In an actual network, one-level NAT or multi-level NAT may exist. When one-level NAT is used, one data flow is generated and is NAT-associated with the first data flow. When multi-level NAT is used, a plurality of data flows are generated and are NAT-associated with the first data flow. Therefore, one or more data flows NAT-associated with the first data flow may be determined.

In an implementation of this application, "NAT-associated with the first data flow" may be belonging to a same NAT session as the first data flow. Alternatively, "NAT-associated with the first data flow" may be belonging to a same NAT session as a data flow obtained after N-level NAT are performed on the first data flow.

The method may be performed by an analysis platform, a network device, a collector, a storage platform, or the like in a network. The collector (namely, a probe) is deployed on a node in the network, and information about a data flow is collected through the collector. The information about the data flow includes a fingerprint feature. The analysis platform is used as an example. The analysis platform performs the data flow identification method by using the fingerprint feature of the data flow collected by the collector.

In some possible implementations, the collector is usually implemented by using software. In other implementations, the collector may alternatively be implemented by using hardware.

To ensure that the collected fingerprint feature can be used to identify whether the data flow is NAT-associated, collectors may be deployed in both upstream and downstream of a node on which a NAT function is enabled. Optionally, the collector may alternatively be deployed in another manner. For example, the following lists three collector deployment manners.

In a first manner, a collector is deployed on each node, to ensure that a fingerprint feature of a data flow of each NAT session can be collected.

In a second manner, collectors are deployed on a plurality of core nodes of a network, for example, collectors are deployed on a plurality of spine switches, a plurality of border nodes, and/or firewalls, so that a fingerprint feature of a data flow of each NAT session can be collected as much as possible.

In a third manner, a collector is deployed on a node having a NAT function, to collect a fingerprint feature of a data flow of each NAT session.

In the first and second deployment manners, the collector is usually deployed in an inbound direction of an interface of a node, and certainly, may alternatively be deployed in an outbound direction of an interface. In the third deployment manner, the collector needs to be deployed in both an inbound direction and an outbound direction of an interface.

In some possible implementations, each node on which a collector (software) is deployed or each collector (hardware) stores information about a data flow collected by the node or the collector.

In some other possible implementations, the network may further include a storage platform, configured to centrally store information about a data flow collected by each collector.

The analysis platform is used as an example. After the information about the data flow is collected, the analysis platform interacts with the collector or the storage platform, to obtain the information about the data flow and further determine the at least one data flow NAT-associated with the first data flow.

The storage platform is used as an example. After the information about the data flow is collected, the storage platform determines, by using locally stored information about the data flow, the at least one data flow NAT-associated with the first data flow.

The following separately describes the two cases.

In a first case, the analysis platform implements the method by interacting with the collector or the storage platform.

In this implementation, the obtaining a fingerprint feature and setup time of a first data flow includes:
sending a first query request to a first network node, where the first query request includes a first flow identifier of the first data flow; and
receiving a first query response sent by the first network node, where the first query response includes the fingerprint feature and the setup time of the first data flow.

The fingerprint feature and the setup time of the first data flow are requested from the first network node, to prepare for subsequently determining the at least one data flow NAT-associated with the first data flow.

The first network node herein may be a collector, a network device on which a collector is deployed, or a storage platform. In addition, when the query request is sent, if the query request is sent to the collector or the network device on which the collector is deployed, the query request may be sent to a plurality of collectors or network devices on which collectors are deployed simultaneously.

For example, the first flow identifier of the data flow is a 5-tuple of the data flow, and includes a source internet protocol (internet protocol, IP) address, a destination IP address, a source port, a destination port, and a protocol type, where the protocol type is a transmission control protocol (transmission control protocol, TCP).

In the foregoing process, after receiving the query request, the first network node performs query by using the first flow identifier as an index, to obtain the fingerprint feature and the setup time of the first data flow.

A data flow is transmitted bidirectionally. Therefore, in addition to that the query is performed by using the original 5-tuple, the query may be further performed by exchanging the source and destination IP addresses, and exchanging the source and destination ports.

Optionally, in addition to the first flow identifier, the first query request further includes a query time range, and the query time range is used to limit a time range of setup time of a found data flow.

For example, the query time range is represented using a specific range, for example, from 00:00 to 24:00 on a day, or from a 0^{th} minute to a 60^{th} minute of an hour on a day. For another example, the query time range is represented using a time granularity. For example, for one day, a corresponding range is the current day, or for one hour, a corresponding range is the current hour.

Certainly, when the first query request does not include the query time range, the query time range may use a default value, for example, a query day.

In some possible implementations, the fingerprint feature of the data flow may include one or more features.

For example, the fingerprint feature includes at least one of the following features:
an internet protocol identifier (IP identifier, IPID) of a first data packet, a payload of the first data packet, a hash value of the payload of the first data packet, an IPID of a synchronize sequence number (synchronize sequence number, SYN) packet in a TCP three-way handshake process, an initial sequence number (initial sequence number, ISN) of the SYN packet in the TCP three-way handshake process, and an ISN of an SYN-ACK packet in the TCP three-way handshake process.

The first data packet (a first packet for short) refers to a 1^{st} data packet transmitted after a TCP three-way handshake connection is established. Different data flows need to transmit different content. Some data flows need to transmit a plurality of data packets to complete content transmission, but some data flows only need to transmit one data packet to complete content transmission. Therefore, in this embodiment of this application, information about the first data packet is used as the fingerprint feature, so that a fingerprint feature can be collected for each data flow that needs to be determined. In addition, the first data packet is the 1^{st} transmitted data packet after the TCP connection is established, and a sequence of the first data packet is equal to the ISN carried in the SYN packet plus 1. The collector may easily determine the first data packet. Therefore, resources and time needed for collecting the first data packet are less than those needed for collecting a subsequent data packet.

During collection, the collector may determine, based on a sequence (sequence) of a data packet, whether the data packet is the first data packet. Usually, the sequence of the first data packet is the ISN of the SYN packet plus 1. A sequence of a 2^{nd} data packet is the ISN of the SYN packet plus 1 plus a length of the first data packet. Therefore, if a feature of a data packet after the first data packet needs to be collected, it is more difficult to determine a sequence of the data packet, and more resources and time are occupied. Therefore, the first data packet is preferentially selected for fingerprint feature collection.

The payload of the first data packet may be the entire payload of the first data packet, or may be a part of the payload of the first data packet, for example, a part of the payload intercepted from a data packet header, for example, a payload of 500 or 1000 bytes. Correspondingly, the hash value of the first data packet may also be a hash value of the entire payload, or may be a hash value of a part of the payload. Details are not described herein again.

In this implementation, collectors collect a same fingerprint feature. Based on theoretical analysis and a large quantity of experiments, an applicant found that the fingerprint feature listed above does not change before and after NAT, and different data flows are not likely to conflict with each other. In other words, although two data flows before and after NAT may have different IP addresses or ports, fingerprint features of the two data flows are the same. Therefore, the fingerprint feature can identify a NAT-associated data flow. In addition, the fingerprint feature collection process listed above is easy to implement, and occupies a small quantity of resources. This facilitates implementation of the method provided in this embodiment of this application.

In another possible implementation, the fingerprint feature of the data flow may further include another feature, as long as the fingerprint feature of the data flow can remain unchanged before and after NAT and different data flows are not likely to conflict with each other. This is not limited in this application.

In some possible implementations, creation time of the data flow collected by the collector may be time of receiving or sending a data packet or a packet.

When collecting the creation time of the data flow, the collector may use one of the following time as the creation time of the data flow:
time of receiving the SYN packet, time of receiving the SYN-ACK packet, and time of receiving an ACK packet, where the ACK packet is an ACK packet in TCP three-way handshake.

Certainly, the foregoing is about a collector in an inbound direction of an interface. For a collector in an outbound direction of an interface, one of the following time is used as the creation time of the data flow:
time of sending the SYN packet, time of sending the SYN-ACK packet, and time of sending the ACK packet.

In another possible implementation, when collecting the creation time of the data flow, the collector may also use other time, for example, time of receiving or sending the first data packet.

In this implementation, the determining, based on the fingerprint feature and the setup time of the first data flow, at least one data flow NAT-associated with the first data flow has a plurality of manners.

In a possible implementation, the analysis platform queries, by using the fingerprint feature of the first data flow, a second data flow having a same fingerprint feature, and then determines, based on creation time of the first data flow and the second data flow, whether the first data flow is NAT-associated with the second data flow. The steps are as follows:
sending a second query request to a second network node, where the second query request includes the fingerprint feature of the first data flow;
receiving a second query response sent by the second network node, where the second query response includes a first flow identifier and setup time of a second data flow having a same fingerprint feature as the first data flow; and
determining, when an absolute value of a time difference between the setup time of the second data flow and the setup time of the first data flow is less than a threshold, that the first data flow is NAT-associated with the second data flow; or
determining, when an absolute value of a time difference between the setup time of the second data flow and the setup time of the first data flow is not less than a threshold, that the first data flow is not NAT-associated with the second data flow.

The second network node and the first network node may be a same network node, or may be different network nodes.

The first network node and the second network node may be a plurality of distributed collectors or network devices on which collectors are deployed.

In this implementation, creation time of the second data flow having the same fingerprint feature is queried for the second time. Then, a NAT-associated data flow is determined by using a determining criterion in which fingerprint features are the same and creation time is similar. Because there are time delays of NAT and data flow transmission between different collectors, there is a time delay between setup time of a data flow collected before NAT and setup time of a data flow collected after NAT. It can be determined, by limiting an absolute value of a time difference between setup time of two data flows to be less than a threshold, that the two data flows having a same fingerprint feature are two data flows obtained before and after NAT.

A problem of synchronization precision exists during collection by collectors on different network nodes, and a transmission delay further exists between different collectors. Therefore, the foregoing threshold may be determined based on the time synchronization precision and/or the transmission delay.

In another possible implementation, the first query response further includes a first flow identifier and setup time of a second data flow having a same fingerprint feature as the first data flow. In this case, the analysis platform directly determines, based on creation time of the two data flows, whether the two data flows are NAT-associated. The step is as follows:
determining, when an absolute value of a time difference between the setup time of the second data flow and the setup time of the first data flow is less than a threshold, that the first data flow is NAT-associated with the second data flow.

In this case, when the analysis platform sends the first query request, in addition to feeding back information about the first data flow to the analysis platform, the first network node may simultaneously query information about the second data flow having the same fingerprint as that of the first data flow, and feed back the information about the first data flow and the information about the second data flow to the analysis platform together. In this way, the analysis platform can directly determine, based on content in the first query response, whether the two data flows are NAT-associated.

In the foregoing several manners of determining the at least one data flow NAT-associated with the first data flow, there may be one or more second data flows. If there are a plurality of second data flows, it is determined whether each second data flow is NAT-associated with the first data flow.

In this case, the first network device may be a storage platform.

In a second case, the storage platform implements the method based on the locally stored collected information.

In this implementation, the obtaining a fingerprint feature and setup time of a first data flow includes:
receiving a first query request, where the first query request includes a first flow identifier of the first data flow; and determining the fingerprint feature and the setup time of the first data flow based on the first flow identifier of the first data flow.

In this case, the method is performed by the storage platform, and the storage platform may query the fingerprint feature and the setup time of the first data flow based on the flow identifier in the query request.

In this implementation, the step of determining, based on the fingerprint feature and the setup time of the first data flow, at least one data flow NAT-associated with the first data flow includes:
determining a second data flow based on the fingerprint feature of the first data flow, where a fingerprint feature of the second data flow is the same as the fingerprint feature of the first data flow; and
determining, when an absolute value of a time difference between setup time of the second data flow and the setup time of the first data flow is less than a threshold, that the first data flow is NAT-associated with the second data flow.

The setup time of the second data flow may be obtained after the fingerprint feature of the first data flow is queried to find the second data flow having the same fingerprint feature.

In an implementation of this application, the fingerprint feature is implemented by using a feature with a low conflict probability. However, to ensure accuracy of determining a NAT-associated data flow, in the foregoing process, a fingerprint conflict may be further excluded. The fingerprint conflict means that fingerprint features of non-NAT-associated data flows are the same.

The determining, when an absolute value of a time difference between setup time of the second data flow and the setup time of the first data flow is less than a threshold, that the first data flow is NAT-associated with the second data flow includes:
determining, when the absolute value of the time difference between the setup time of the second data flow and the setup time of the first data flow is less than the threshold and a fingerprint conflict does not exist between the first data flow and the second data flow, that the first data flow is NAT-associated with the second data flow; or
determining, when the absolute value of the time difference between the setup time of the second data flow and the setup time of the first data flow is less than the threshold and a fingerprint conflict exists between the first data flow and the second data flow, that the first data flow is not NAT-associated with the second data flow. That is, the fingerprint conflict exists.

For example, the following steps may be used to determine that a fingerprint conflict exists between the first data flow and the second data flow:
determining at least one third data flow having a same second flow identifier as the second data flow;
determining at least one fourth data flow having a same fingerprint feature as each third data flow; and
determining, when an absolute value of a time difference between setup time of one fourth data flow in the at least one fourth data flow and setup time of a corresponding third data flow is less than a threshold and a second flow identifier of the fourth data flow is the same as a second flow identifier of the first data flow, that a fingerprint conflict does not exist between the first data flow and the second data flow.

A second flow identifier of a data flow may be a quadruplet, including a source IP address, a destination IP address, a destination port, and a protocol type.

In the foregoing process of determining a fingerprint conflict, a principle used is to query whether NAT is performed, in a historical record, on a data flow having a same quadruplet as the data flow. If NAT is performed on the data flow having the same quadruplet, it indicates that NAT is also performed this time, rather than a fingerprint conflict occurs.

During implementation, a third data flow having a same second flow identifier as the second data flow is first determined, and then a fourth data flow having a same fingerprint feature as the third data flow is queried, where a difference between setup time of the third data flow and setup time of the fourth data flow is less than a threshold. If a second flow identifier of the fourth data flow is the same as that of the first data flow, it indicates that NAT is performed, rather than a fingerprint conflict occurs. "Having a same second flow identifier" indicates that two data flows are sent from a same source address to a same destination address and are on a same side of NAT (before or after translation). If the third data flow and the fourth data flow have a NAT relationship, the second data flow and the first data flow that respectively correspond to the third data flow and the fourth data flow also have a NAT relationship.

In an implementation of this application, the first data flow may be a data flow selected by a user. When observing that the first data flow is faculty, the user determines a data flow NAT-associated with the first data flow. Certainly, in another implementation, the first data flow may alternatively be automatically selected by a diagnosis device. The diagnosis device detects a fault of the first data flow, and then determines a data flow NAT-associated with the first data flow.

After it is determined that a data flow NAT-associated with the first data flow exists, the method further includes:
when the first data flow is faulty, performing fault diagnosis on the first data flow and the at least one data flow NAT-associated with the first data flow.

Fault diagnosis may be performed on NAT-associated data flows simultaneously to ensure accuracy of the fault diagnosis.

After it is determined that no data flow NAT-associated with the first data flow exists, the method further includes:
performing fault diagnosis on the first data flow when the first data flow is faulty.

That the data flow is faulty refers to an application based on the data flow is faulty, and includes but is not limited to a case in which a packet loss rate of the data flow is high, a delay is large, or the like.

According to a second aspect, this application provides a data flow identification method. The method includes: receiving a query request, where the query request includes a first flow identifier of a first data flow; and sending a query response, where the query response includes a fingerprint feature and setup time of the first data flow, and the fingerprint feature and the setup time of the first data flow are used to determine at least one data flow NAT-associated with the first data flow.

A difference between the method provided in the second aspect and the method provided in the first aspect lies in that: In the method provided in the second aspect, only a fingerprint feature of a data flow is queried and fed back, and at least one data flow NAT-associated with the first data flow is not determined.

The method may be performed by a collector, a network device on which a collector is deployed, or a storage platform.

In some possible implementations, the query response further includes a first flow identifier and setup time of a second data flow having a same fingerprint feature as the first data flow.

Optionally, the method further includes:
collecting setup time, a first flow identifier, and a fingerprint feature of each data flow; and
storing the setup time, the first flow identifier, and the fingerprint feature of each data flow.

In some possible implementations, the collector is connected in a bypass manner. In this case, the collecting setup time, a first flow identifier, and a fingerprint feature of each data flow includes:
capturing a packet of a data flow through a mirroring function; and
analyzing the captured packet of the data flow, to obtain setup time, a first flow identifier, and a fingerprint feature of the data flow.

In an implementation of this application, when a fingerprint feature is a feature of an SYN packet in TCP three-way handshake, the capturing a packet of a data flow through a mirroring function includes:
capturing the SYN packet and/or an SYN-ACK packet by configuring an access control list (access control list, ACL).

Features of the SYN packet and/or the SYN-ACK packet are collected by configuring the ACL. This reduces a quantity of packets to be captured and reduces collection burden.

In some other possible implementations, the collector is connected in an in-line manner. In this case, a packet of a data flow is directly analyzed to obtain setup time, a first flow identifier, and a fingerprint feature of the data flow.

According to a third aspect, a data flow identification apparatus is provided. The apparatus includes:
an obtaining unit, configured to obtain a fingerprint feature and setup time of a first data flow; and
a determining unit, configured to determine, based on the fingerprint feature and the setup time of the first data flow, at least one data flow NAT-associated with the first data flow.

Optionally, the obtaining unit is configured to: send a first query request to a first network node, where the first query request includes a first flow identifier of the first data flow; and receive a first query response sent by the first network node, where the first query response includes the fingerprint feature and the setup time of the first data flow.

Optionally, the determining unit is configured to: send a second query request to a second network node, where the second query request includes the fingerprint feature of the first data flow; receive a second query response sent by the second network node, where the second query response includes a first flow identifier and setup time of a second data flow having a same fingerprint feature as the first data flow; and determine, when an absolute value of a time difference between the setup time of the second data flow and the setup time of the first data flow is less than a threshold, that the first data flow is NAT-associated with the second data flow.

Optionally, the first query response further includes a first flow identifier and setup time of a second data flow having a same fingerprint feature as the first data flow.

The determining unit is configured to determine, when an absolute value of a time difference between setup time of the second data flow and the setup time of the first data flow is less than a threshold, that the first data flow is NAT-associated with the second data flow.

Optionally, the obtaining unit is configured to: receive a first query request, where the first query request includes a first flow identifier of the first data flow; and determine the fingerprint feature and the setup time of the first data flow based on the first flow identifier of the first data flow.

Optionally, the determining unit is configured to: determine a second data flow based on the fingerprint feature of the first data flow, where a fingerprint feature of the second data flow is the same as the fingerprint feature of the first data flow; and determine, when an absolute value of a time difference between setup time of the second data flow and the setup time of the first data flow is less than a threshold, that the first data flow is NAT-associated with the second data flow.

Optionally, the fingerprint feature includes at least one of the following features:
an internet protocol identifier IPID of a first data packet, a payload of the first data packet, a hash value of the payload of the first data packet, an IPID of an SYN packet in a transmission control protocol TCP three-way handshake process, an initial sequence number ISN of the SYN packet in the TCP three-way handshake process, and an ISN of an SYN-ACK packet in the TCP three-way handshake process.

Optionally, the first query request further includes a query time range, and the query time range is used to limit a time range of setup time of a found data flow.

Optionally, the determining unit is configured to determine, when the absolute value of the time difference between the setup time of the second data flow and the setup time of the first data flow is less than the threshold and a fingerprint conflict does not exist between the first data flow and the second data flow, that the first data flow is NAT-associated with the second data flow, where the fingerprint conflict means that fingerprint features of non-NAT-associated data flows are the same.

Optionally, the determining unit is further configured to: determine at least one third data flow having a same second flow identifier as the second data flow; determine at least one fourth data flow having a same fingerprint feature as each third data flow; and determine, when an absolute value of a time difference between setup time of one fourth data flow in the at least one fourth data flow and setup time of a corresponding third data flow is less than a threshold and a second flow identifier of the fourth data flow is the same as a second flow identifier of the first data flow, that a fingerprint conflict does not exist between the first data flow and the second data flow.

Optionally, the apparatus further includes:
a diagnosis unit, configured to: when the first data flow is faulty, perform fault diagnosis on the first data flow and the at least one data flow NAT-associated with the first data flow.

According to a fourth aspect, a data flow identification apparatus is provided. The apparatus includes:
a receiving unit, configured to receive a query request, where the query request includes a first flow identifier of a first data flow; and
a sending unit, configured to send a query response, where the query response includes a fingerprint feature and setup time of the first data flow, and the fingerprint feature and the setup time of the first data flow are used to determine at least one data flow NAT-associated with the first data flow.

Optionally, the query response further includes a first flow identifier and setup time of a second data flow having a same fingerprint feature as the first data flow.

Optionally, the apparatus further includes:
a collection unit, configured to collect setup time, a first flow identifier, and a fingerprint feature of each data flow; and
a storage unit, configured to store the setup time, the first flow identifier, and the fingerprint feature of each data flow.

Optionally, the collection unit is configured to: capture a packet of a data flow through a mirroring function; and analyze the captured packet of the data flow, to obtain setup time, a first flow identifier, and a fingerprint feature of the data flow.

According to a fifth aspect, an electronic device is provided. The electronic device includes a processor and a memory. The memory is configured to store a software program and a module. The processor runs or executes the software program and/or the module stored in the memory to implement the method according to any one of the first aspect or the possible implementations of the first aspect, or implement the method according to any one of the second aspect or the possible implementations of the second aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

According to a sixth aspect, a data flow identification system is provided. The data flow identification system includes a collector and an analysis platform. The analysis platform is configured to perform the method according to any one of the first aspect or the possible implementations of the first aspect, and the collector is configured to perform the method according to any one of the second aspect or the possible implementations of the second aspect.

Optionally, the data flow identification system further includes a storage platform, configured to store information about a data flow collected by the collector.

According to a seventh aspect, a computer program product is provided. The computer program product includes computer program code. When the computer program code is run by a computer, the computer is enabled to perform the method according to any one of the first aspect or the possible implementations of the first aspect, or perform the method according to any one of the second aspect or the possible implementations of the second aspect.

According to an eighth aspect, this application provides a computer-readable storage medium. The computer-readable storage medium is used to store program code executed by a processor, and the program code includes the method used to implement any one of the possible implementations of the first aspect, or the method used to implement any one of the second aspect or the possible implementations of the second aspect.

According to a ninth aspect, a chip is provided, including a processor. The processor is configured to invoke, from a memory, and run instructions stored in the memory, so that a communication device in which the chip is installed performs the method according to any one of the possible implementations of the first aspect, or performs the method according to any one of the second aspect or the possible implementations of the second aspect.

According to a tenth aspect, another chip is provided. The another chip includes an input interface, an output interface, a processor, and a memory. The input interface, the output interface, the processor, and the memory are connected through an internal connection path. The processor is configured to execute code in the memory, and when the code is executed, the processor is configured to perform the method according to any one of the possible implementations of the first aspect, or perform the method according to any one of the second aspect or the possible implementations of the second aspect.

### BRIEF DESCRIPTION OF DRAWINGS

FIG. 1 is a diagram of a structure of an application scenario according to an embodiment of this application;
FIG. 2 is a diagram of a structure of another application scenario according to an embodiment of this application;
FIG. 3 is a schematic of a network topology of a data center according to an embodiment of this application;
FIG. 4 is a flowchart of a data flow identification method according to an embodiment of this application;
FIG. 5 is a flowchart of a data flow identification method according to an embodiment of this application;
FIG. 6 is a flowchart of a data flow information collection method according to an embodiment of this application;
FIG. 7 is a flowchart of a data flow identification method according to an embodiment of this application;
FIG. 8 is a flowchart of a data flow identification method according to an embodiment of this application;
FIG. 9 is a flowchart of a data flow identification method according to an embodiment of this application;
FIG. 10 is a block diagram of a data flow identification apparatus according to an embodiment of this application;
FIG. 11 is a block diagram of a data flow identification apparatus according to an embodiment of this application; and
FIG. 12 is a diagram of a structure of an electronic device according to an embodiment of this application.

### DESCRIPTION OF EMBODIMENTS

To make the objectives, technical solutions, and advantages of this application clearer, the following further describes the implementations of this application in detail with reference to the accompanying drawings.

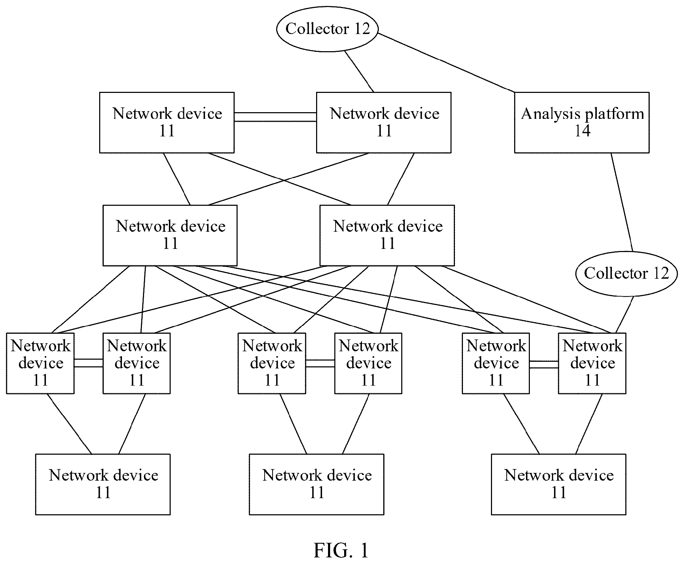

FIG. 1 is a diagram of a structure of an application scenario according to an embodiment of this application. Refer to FIG. 1. The application scenario includes a plurality of network devices 11, and the plurality of network devices 11 form a network, for example, a data center network. The network device 11 may be a switch, a routing device, a firewall device, a server, or the like.

A NAT function is deployed and enabled on at least some network devices 11 of the plurality of network devices 11. As shown in FIG. 1, collectors 12 are deployed on at least some network devices 11 of the plurality of network devices 11, and are configured to collect information about a data flow.

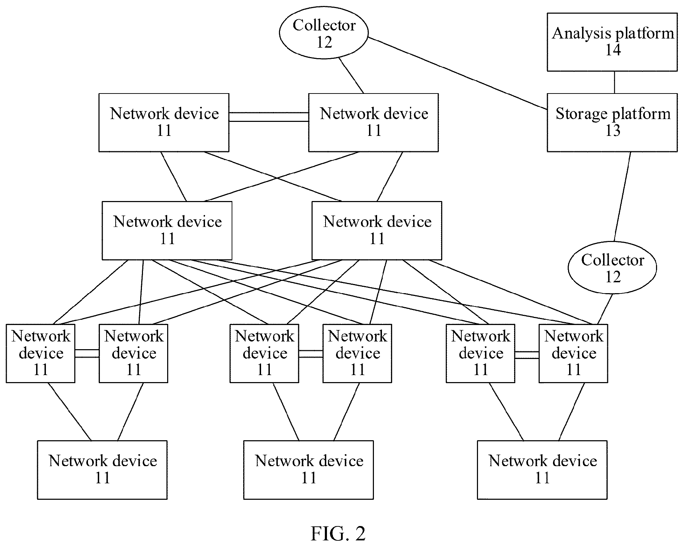

FIG. 2 is a diagram of a structure of another application scenario according to an embodiment of this application. Refer to FIG. 2. A difference between the application scenario and the application scenario in FIG. 1 lies in that the application scenario further includes a storage platform 13. The storage platform 13 is simultaneously connected to collectors 12, and is configured to centrally store information about a data flow collected by each collector.

In this embodiment of this application, both the collector and the storage platform may provide a data query interface externally.

Optionally, in the scenarios in FIG. 1 and FIG. 2, an analysis platform 14 may be further included. The analysis platform 14 is simultaneously connected to collectors 12, or is connected to the storage platform 13, and determines a NAT-associated data flow by analyzing information about the data flow. Optionally, the storage platform and the analysis platform may be integrated into a same device. For example, the analysis platform includes a storage module, or the storage platform includes an analysis module.

In this embodiment of this application, the network device, the collector, the storage platform, or the analysis platform may determine the NAT-associated data flow by using the information about the data flow.

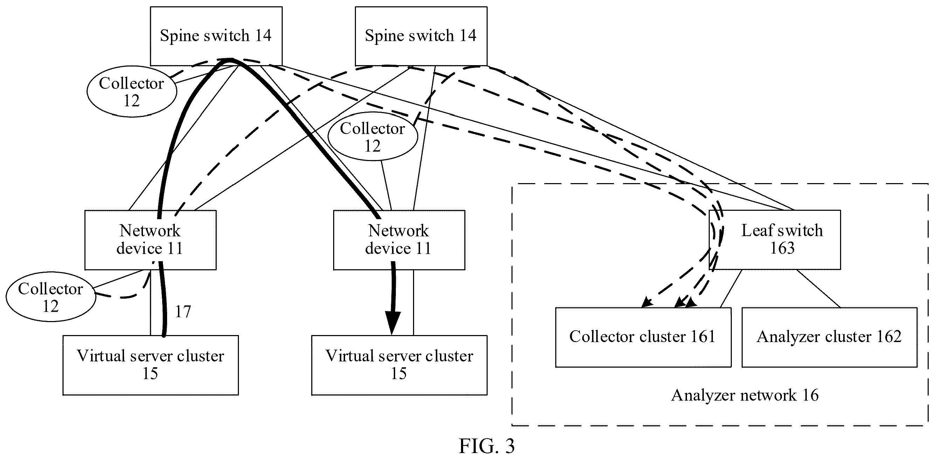

FIG. 3 is a schematic of a network topology of a data center according to an embodiment of this application. Refer to FIG. 3. The data center includes spine switches 14 and virtualization server clusters 15, and the spine switches 14 are respectively connected to the virtualization server clusters 15.

Optionally, the data center may further include an analyzer network 16. The analyzer network 16 includes a collector cluster 161, an analyzer cluster 162, and a leaf switch 163. The spine switches 14 are respectively connected to the collector cluster 161 and the analyzer cluster 162 via the leaf switch 163. The collector cluster 161 includes the foregoing storage platform, and the analyzer cluster 162 includes the foregoing analysis platform. In another implementation, the analyzer network 16 may alternatively be independent of the data center, and correspondingly, the leaf switch 163 may be another network device.

Both the spine switch 14 and the virtualization server cluster 15 belong to the foregoing network device 11, and a collector 12 is deployed on the spine switch 14 and a network device 11 between the spine switch 14 and the virtualization server cluster 15. In transmission of a data flow 17, three collectors 12 collect information about the data flow, and then upload the information to the storage platform of the collector cluster 161 through paths shown by dashed lines.

A firewall (firewall, FW) (not shown in the figure) is deployed at a border of the data center, and a NAT function is enabled, to protect a network of the data center.

In this embodiment of this application, to ensure that a collected fingerprint feature can be used to identify whether a data flow is NAT-associated, collectors may be deployed in both upstream and downstream of a node on which the NAT function is enabled. Optionally, the collector may alternatively be deployed in another manner. For example, the following lists three collector deployment manners.

In a first manner, a collector is deployed on each node, to ensure that a fingerprint feature of a data flow of each NAT session can be collected.

In a second manner, collectors are deployed on a plurality of core nodes of a network, for example, collectors are deployed on a plurality of spine switches, a plurality of border nodes, and/or firewalls, so that a fingerprint feature of a data flow of each NAT session can be collected as much as possible. Usually, the core node is deployed on both sides of a device on which a NAT function is enabled. Therefore, the collectors are deployed on these core nodes to collect the fingerprint feature of the data flow of each NAT session. The data center shown in FIG. 3 is used as an example. A firewall with the NAT function enabled is usually connected to two spine switches. A data flow passes through one spine switch, is subject to NAT in the firewall, and then passes through the other spine switch. Therefore, collectors are deployed on the two spine switches to collect fingerprint features of the data flow before and after NAT.

In a third manner, a collector is deployed on a node having a NAT function, to collect a fingerprint feature of a data flow of each NAT session.

In the first and second deployment manners, the collector is usually deployed in an inbound direction of an interface of a node, and certainly, may alternatively be deployed in an outbound direction of an interface. In the third deployment manner, the collector needs to be deployed in both an inbound direction and an outbound direction of an interface.

In some possible implementations, each node on which the collector (software) is deployed or each collector (hardware) stores information about a data flow collected by the node or the collector.

In some possible implementations, the collector sends collected data flow information to the storage platform, and the storage platform centrally stores the collected data flow information.

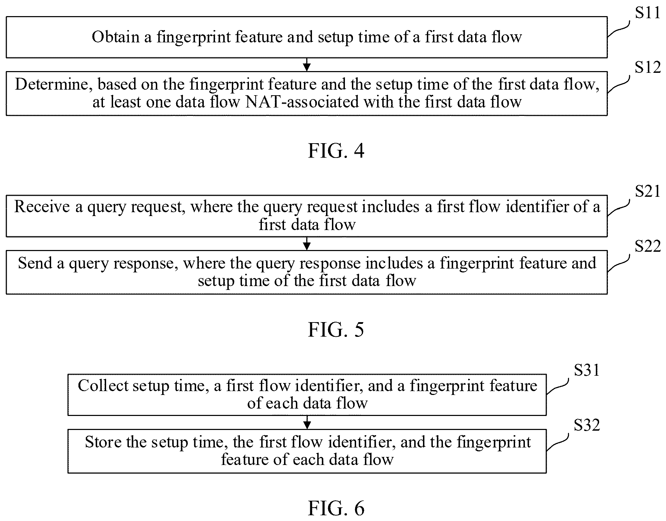

FIG. 4 is a flowchart of a data flow identification method according to an embodiment of this application. In some possible implementations, the method may be performed by the analysis platform in the application scenarios shown in FIG. 1 to FIG. 3. The analysis platform is connected to each collector or connected to a storage platform, to obtain data flow information to implement the method, or the analysis platform obtains data flow information stored in the analysis platform to implement the method. In some other possible implementations, the method may alternatively be performed by the network device in the application scenarios shown in FIG. 1 to FIG. 3. The following uses an example in which the method is performed by the analysis platform for description. As shown in FIG. 4, the method includes the following steps.

S11: Obtain a fingerprint feature and setup time of a first data flow.

In this embodiment of this application, the fingerprint feature includes at least one of the following features:
an IPID of a first data packet, a payload of the first data packet, a hash value of the payload of the first data packet, an IPID of an SYN packet in a TCP three-way handshake process, an ISN of the SYN packet in the TCP three-way handshake process, and an ISN of an SYN-ACK packet in the TCP three-way handshake process.

For example, the fingerprint feature is any one of the foregoing features. For example, the fingerprint feature is the IPID of the first data packet, the hash value of the payload of the first data packet, or the ISN of the SYN packet. A separate field is used as the fingerprint feature, which reduces computing and storage burden.

For example, the fingerprint feature includes a plurality of the foregoing features. For example, the fingerprint feature includes the ISN of the SYN packet and the IPID of the first data packet, or the payload of the first data packet and the ISN of the SYN packet, or the payload of the first data packet, the ISN of the SYN packet, and the IPID of the first data packet. A combination of a plurality of fields is used as the fingerprint feature, which reduces a possibility of a fingerprint conflict.

The IPID is a 16-bit field that identifies an IP data packet at an IP layer, and identifies each IP packet sent by a host. The ISN is a 32-bit initial sequence number that is carried in the SYN packet during the three-way handshake of TCP connection establishment and that is used to be notified to a peer end. A payload of a data packet is application layer content carried in the data packet (that is, content after a TCP header in the data packet).

If the SYN packet or the first data packet (a first packet for short) is retransmitted during a collection process, a last SYN packet or data packet received during retransmission is used as a collection object to collect a fingerprint feature, to ensure that fingerprint features collected by collectors are consistent. In other words, for one data flow, if a collector receives a plurality of SYN packets or a plurality of first packets within a period of time, the collector obtains a fingerprint feature from a last received SYN packet or a last received first packet.

The first data packet refers to a 1^{st} data packet transmitted after a TCP three-way handshake connection is established. Different data flows need to transmit different content. Some data flows need to transmit a plurality of data packets to complete content transmission, but some data flows only need to transmit one data packet to complete content transmission. Therefore, in this embodiment of this application, information about the first data packet is used as the fingerprint feature, to ensure that a fingerprint feature can be collected for each data flow that needs to be determined. In addition, the first data packet is the 1^{st} transmitted data packet after the TCP connection is established, and a sequence of the first data packet is equal to the ISN carried in the SYN packet plus 1. The collector may easily determine the first data packet. Therefore, resources and time needed for collecting the first data packet are less than those needed for collecting a subsequent data packet.

During collection, the collector may determine, based on a sequence of a data packet, whether the data packet is the first data packet. Usually, the sequence of the first data packet is the ISN of the SYN packet plus 1. A sequence of a 2^{nd} data packet is the ISN of the SYN packet plus 1 plus a length of the first data packet. Therefore, if a feature of a data packet after the first data packet needs to be collected, it is more difficult to determine a sequence of the data packet, and more resources and time are occupied. Therefore, the first data packet is preferentially selected for fingerprint feature collection.

The payload of the first data packet may be the entire payload of the first data packet, or may be a part of the payload of the first data packet, for example, a part of the payload intercepted from a data packet header, for example, a payload of 500 or 1000 bytes. Correspondingly, the hash value of the first data packet may also be a hash value of the entire payload, or may be a hash value of a part of the payload. Details are not described herein again.

Because the payload of the first data packet or the hash value of the payload of the first data packet may only correspond to the payload of a partial length, the payload of the first data packet may include payload content and a payload length, and the hash value of the payload of the first data packet may include the hash value and the payload length. The payload length may be used as an identifier to identify a length of payload content or a length of payload content corresponding to a hash value, and is optional. The payload length may be used to filter the fingerprint feature. For example, when obtaining payload content or a hash value of a payload collected by each collector, the analysis platform may determine, based on payload lengths, whether the lengths of the payload collected and configured by collectors are the same. If the lengths are the same, the collected payload content or the hash value of the payload may be used as the fingerprint feature; otherwise, the collected payload content or the hash value of the payload is not used as the fingerprint feature. If the fingerprint feature only applies to a part of the payload, a payload of a needed length is directly intercepted for feature extraction through port mirroring.

In this implementation, collectors collect a same fingerprint feature. Based on theoretical analysis and a large quantity of experiments, an applicant found that the fingerprint feature listed above does not change before and after NAT, and different data flows are not likely to conflict with each other. In other words, although two data flows before and after NAT may have different IP addresses or ports, fingerprint features of the two data flows are the same. Therefore, the fingerprint feature can identify a NAT-associated data flow. In addition, the fingerprint feature collection process listed above is easy to implement, and occupies a small quantity of resources. This facilitates implementation of the method provided in this embodiment of this application.

The setup time indicates a setup moment of the first data flow, for example, a moment at which a connection of the first data flow starts to be established, a moment at which a connection of the first data flow is established, or a moment at which a data packet of the first data flow starts to be sent. For example, the setup time may be time of receiving the SYN packet, time of receiving the SYN-ACK packet, time of receiving an ACK packet, time of sending the SYN packet, time of sending the SYN-ACK packet, time of sending the ACK packet, or time of receiving or sending the first data packet. The SYN, SYN-ACK, and ACK packets are packets in the TCP three-way handshake corresponding to the first data flow. The first data packet is a 1^{st} data packet sent or received after the TCP connection corresponding to the first data flow is established.

S12: Determine, based on the fingerprint feature and the setup time of the first data flow, at least one data flow NAT-associated with the first data flow.

"NAT-associated with the first data flow" may be belonging to a same NAT session as the first data flow.

A NAT session includes a data flow before NAT and a data flow after NAT. For example, if the first data flow is a data flow before translation by a NAT device A, and a second data flow is a data flow obtained after the NAT device A performs NAT on the first data flow, the first data flow and the second data flow belong to a same NAT session. The data flow before NAT and the data flow after NAT have a same fingerprint feature. For example, an IPID of an SYN packet of the first data flow is the same as an IPID of an SYN packet of the second data flow, an ISN of the SYN packet of the first data flow is the same as an ISN of the SYN packet of the second data flow, an IPID of a first packet of the first data flow is the same as an IPID of a first packet of the second data flow, a payload of the first packet of the first data flow is the same as a payload of the first packet of the second data flow, a hash value of the payload of the first packet of the first data flow is the same as a hash value of the payload of the first packet of the second data flow, and an ISN of an SYN-ACK packet of the first data flow is the same as an ISN of an SYN-ACK packet of the second data flow.

Alternatively, "NAT-associated with the first data flow" may be belonging to a same NAT session as a data flow obtained after N times of NAT are performed on the first data flow.

N is a natural number greater than or equal to 1. For example, a service data flow may be subject to NAT for a plurality of times (for example, M NAT devices are deployed on a transmission path) from a service source end to a service destination end. Assuming that the first data flow is a data flow sent from the service source end, the data flow changes to a second data flow after NAT performed by a first NAT device, the second data flow and the first data flow belong to a same NAT session, the second data flow changes to a third data flow after NAT performed by a second NAT device, the third data flow and the second data flow belong to the same NAT session, the third data flow is NAT-associated with the first data flow, and so on. An (M-1)^{th} data flow changes to an M^{th} data flow after translation by an (M-1)^{th} NAT device, the M^{th} data flow and the (M-1)^{th} data flow belong to the same NAT session, the M^{th} data flow is NAT-associated with the first data flow, the M^{th} data flow changes to an (M+1)^{th} data flow after translation by an M^{th} NAT device, the (M+1)^{th} data flow and the M^{th} data flow belong to the same NAT session, and the (M+1)^{th} data flow is also NAT-associated with the first data flow. The second data flow is a data flow obtained after one time of NAT is performed on the first data flow, and the third data flow and the second data flow belong to the same NAT session, in other words, the third data flow and the data flow obtained after one time of NAT is performed on the first data flow belong to the same NAT session. The (M-1)^{th} data flow is a data flow obtained after (M-1) times of NAT are performed on the first data flow, and the M^{th} data flow and the (M-1)^{th} data flow belong to the same NAT session, in other words, the M^{th} data flow and the data flow obtained after (M-1) times of NAT are performed on the first data flow belong to the same NAT session. The M^{th} data flow is a data flow obtained after M times of NAT are performed on the first data flow, and the (M+1)^{th} data flow and the M^{th} data flow belong to the same NAT session, in other words, the (M+1)^{th} data flow and the data flow obtained after M times of NAT are performed on the first data flow belong to the same NAT session. Fingerprint features of data flows before and after NAT are the same, in other words, fingerprint features of data flows belonging to a same NAT session are the same, and every two data flows of the first data flow and the at least one data flow NAT-associated with the first data flow belong to a same NAT session. Therefore, fingerprint features of the first data flow and a data flow NAT-associated with the first data flow are the same.

The analysis platform may determine a data flow whose fingerprint feature is the same as the fingerprint feature of the first data flow and whose setup time is close to the setup time of the first data flow as the data flow NAT-associated with the first data flow. That the setup time is close to the setup time of the first data flow is, for example, an absolute value of a difference between the setup time and the setup time of the first data flow is less than a threshold.

In this embodiment of this application, the at least one data flow NAT-associated with the first data flow is determined by using the fingerprint feature of the first data flow, and a session table does not need to be read from a NAT device. Therefore, implementation difficulty and costs are low, and network deployment difficulty is low.

FIG. 5 is a flowchart of a data flow identification method according to an embodiment of this application. The method may be performed by the collector, the network device on which the collector is deployed, or the storage platform in the application scenarios shown in FIG. 1 to FIG. 3. As shown in FIG. 5, the method includes the following steps.

S21: Receive a query request, where the query request includes a first flow identifier of a first data flow.

S22: Send a query response, where the query response includes a fingerprint feature and setup time of the first data flow, and the fingerprint feature and the setup time of the first data flow are used to determine at least one data flow NAT-associated with the first data flow.

After the first flow identifier of the first data flow is received, query is performed by using the first flow identifier as an index, to obtain the fingerprint feature and the setup time of the first data flow, and then the query response is fed back.

Optionally, the query request may further include a query time range. When the query request includes the query time range, a data flow set up in the query time range is queried.

The query time range is a recording condition used to assist in querying a data flow. If the query time range is not specified, a system uses a default value, for example, a current day.

If the query time range is large, and a plurality of data flows are found, fingerprint features of the plurality of data flows may be returned as a response, or a fingerprint feature of one data flow selected from the plurality of data flows may be used as a response. A selection basis may be creation time of a flow. For example, a fingerprint feature of a data flow that has latest creation time and that is automatically selected by the collector or the storage platform is used as a response. The data flow that has latest creation time is, for example, a latest data flow recorded by the collector or the storage platform. When the query request further includes the query time range, the data flow that has latest creation time is, for example, a latest data flow recorded in the query time range. Alternatively, when the plurality of data flows are found, creation time of the plurality of data flows is fed back to an analysis platform. The analysis platform provides a selection interface for a user to select from the plurality of data flows based on the creation time, and then feeds back a selection result to the collector or the storage platform. Then, the collector or the storage platform feeds back a fingerprint feature of a corresponding data flow based on the selection.

FIG. 6 is a flowchart of a data flow information collection method according to an embodiment of this application. This method is performed by a collector. As shown in FIG. 6, the method includes the following steps.

S31: Collect setup time, a first flow identifier, and a fingerprint feature of each data flow.

In some possible implementations, the collector is connected in a bypass manner. In this case, the collecting setup time, a first flow identifier, and a fingerprint feature of each data flow includes:
capturing a packet of a data flow through a mirroring function; and
analyzing the captured packet of the data flow, to obtain setup time, a first flow identifier, and a fingerprint feature of the data flow.

The mirroring function may be packet port mirroring or remote mirroring (for example, encapsulated remote switch port analyzer (encapsulated remote switch port analyzer, ERSPAN) remote mirroring). In packet port mirroring, a port packet is replicated without being changed. In remote mirroring, a port packet is encapsulated and then replicated remotely.

In an implementation of this application, when the fingerprint feature is a feature of an SYN packet and/or an SYN-ACK packet in TCP three-way handshake, the capturing a packet of a data flow through a mirroring function includes:
capturing the SYN packet and/or the SYN-ACK packet by configuring an ACL.

When the mirroring function is configured, a plurality of optional parameters of the mirroring function may be configured, where the optional parameters may include the ACL. The ACL can be used to filter a specified packet or a specified packet length, to implement SYN packet and/or SYN-ACK packet collection.

Only a three-way handshake packet in a TCP connection establishment process is captured by configuring the ACL to collect a feature of the SYN packet and/or the SYN-ACK packet. This reduces a quantity of mirrored packets to be captured, reduces mirroring burden of a network device and packet processing burden of the collector, and facilitates large-scale deployment. Compared with a feature of a first packet, a feature of the SYN packet or the SYN-ACK packet is used as a fingerprint feature, which reduces processing burden.

In some other possible implementations, the collector is connected in an in-line manner. For example, a forwarding device also includes a collection function. In this case, the collector directly analyzes the packet of the data flow, to obtain the setup time, the first flow identifier, and the fingerprint feature of the data flow.

For example, when collecting creation time of the data flow, the collector may use one of the following time as the creation time of the data flow:
time of receiving the SYN packet, time of receiving the SYN-ACK packet, and time of receiving an ACK packet, where the ACK packet is an ACK packet in TCP three-way handshake.

When collecting the time of receiving the ACK packet in the TCP three-way handshake, the collector may collect, based on the SYN packet or the SYN-ACK packet, time of receiving a first ACK packet after the SYN packet or the SYN-ACK packet, that is, the time of receiving the ACK packet in the TCP three-way handshake.

Certainly, the foregoing is about a collector in an inbound direction of an interface. For a collector in an outbound direction of an interface, one of the following time is used as the creation time of the data flow:
time of sending the SYN packet, time of sending the SYN-ACK packet, and time of sending the ACK packet.

S32: Store the setup time, the first flow identifier, and the fingerprint feature of each data flow.

In some possible implementations, the collector locally stores collected data, or stores collected data in a network device on which the collector is deployed.

In some other possible implementations, the collector sends collected data to a storage platform for centralized storage.

For example, the first flow identifier of the data flow is a 5-tuple of the data flow, and includes a source IP address, a destination IP address, a source port, a destination port, and a protocol type, where the protocol type is a TCP.

In this embodiment of this application, information about the data flow may be stored in a format in the following Table 1.

**Table 1**

| Recording time | Destination IP address | Destination port | Source IP address | Source port | Protocol type | Setup time | Fingerprint feature 1 | Fingerprint feature 2 |
|---|---|---|---|---|---|---|---|---|
| 11:24:32 | 100.1.1.1 | 80 | 200.1.1.1 | 65432 | TCP | 11:24:31.312 | A | B |

The recording time may be collection time, or may be storage time. Because the recording time is usually close to the setup time, the query time range may limit the setup time, or may limit the recording time. This is not limited herein.

The fingerprint feature of the data flow may include one feature or a plurality of features. Table 1 includes two features. This is merely an example and is not intended to limit this application.

Certainly, in addition to collecting and storing the foregoing information about the flow, the collector may further collect and record information such as a quantity of packets, a rate, and a packet loss rate.

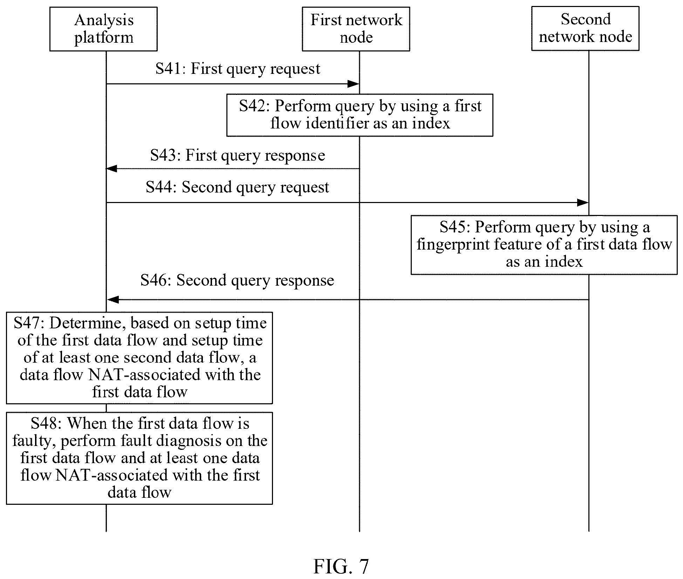

FIG. 7 is a flowchart of a data flow identification method according to an embodiment of this application. An example in which the method is jointly performed by an analysis platform, a first network node, and a second network node is used for description. For example, the first network node and the second network node are collectors or network devices on which collectors are deployed. As shown in FIG. 7, the method includes the following steps.

S41: The analysis platform sends a first query request to the first network node, where the first query request includes a first flow identifier of a first data flow; and the first network node receives the first query request.

There may be one or more first network nodes herein.

In addition to the flow identifier, the first query request may further include a parameter field indicating the request. For example, the first query request may carry different identifiers to indicate different parameters to be requested. For example, an identifier a indicates to request setup time of a data flow, and an identifier b indicates to request a fingerprint feature of the data flow. Certainly, the manner of indicating the request is merely an example, and is not intended to limit this application.

S42: The first network node performs query by using the first flow identifier as an index. When a result is found, a fingerprint feature and setup time of the first data flow are obtained, and then S43 is performed; otherwise, subsequent steps are not performed.

The network node herein is the collector or the network device on which the collector is deployed, and stores the information about the data flow shown in Table 1. Therefore, the first flow identifier (a 5-tuple) may be used as the index for query.

If the analysis platform sends the first query request to a plurality of first network nodes, each first network node performs step S42.

Optionally, when no result is found, the method may further include: The first network node feeds back a query failure message to the analysis platform, to notify the analysis platform that no result is found.

S43: The first network node sends a first query response to the analysis platform, where the first query response includes the fingerprint feature and the setup time of the first data flow; and the analysis platform receives the first query response.

S44: The analysis platform sends a second query request to the second network node, where the second query request includes the fingerprint feature of the first data flow; and the second network node receives the second query request.

There may be one or more second network nodes herein. The second network node and the first network node may be at least partially the same, or may be completely different.

S45: The second network node performs query by using the fingerprint feature of the first data flow as an index. When a result is found, a first flow identifier and setup time of a second data flow having a same fingerprint feature as the first data flow are obtained, and then S46 is performed; otherwise, subsequent steps are not performed.

If the analysis platform sends the second query request to a plurality of second network nodes, each second network node performs step S45.

Optionally, when no result is found, the method may further include: The second network node feeds back a query failure message to the analysis platform, to notify the analysis platform that no result is found.

S46: The second network node sends a second query response to the analysis platform, where the second query response includes the first flow identifier and the setup time of the second data flow having the same fingerprint feature as the first data flow; and the analysis platform receives the second query response.

If the analysis platform sends the second query request to the plurality of second network nodes, the analysis platform may receive second query responses sent by different second network nodes. Each second query response may include the first flow identifier of the same second data flow. This corresponds to a scenario in which only one NAT device exists on a transmission path between a source end and a destination end of the first data flow. Different second query responses may include first flow identifiers of different second data flows. This corresponds to a scenario in which a plurality of NAT devices exist on the transmission path between the source end and the destination end of the first data flow. Correspondingly, the analysis platform may obtain information about a plurality of second data flows.

S47: The analysis platform determines, based on the setup time of the first data flow and setup time of at least one second data flow, a data flow NAT-associated with the first data flow.

When the analysis platform only obtains one second data flow and an absolute value of a time difference between setup time of the second data flow and the setup time of the first data flow is less than a threshold, the analysis platform determines that the first data flow and the second data flow belong to a same NAT session, in other words, the second data flow is a data flow NAT-associated with the first data flow. Otherwise, the analysis platform determines that the first data flow and the second data flow do not belong to a same NAT session.

Because there may be a plurality of levels of NAT sessions, a plurality of data flows may be NAT-associated with the first data flow. Therefore, when a plurality of data flows having a same fingerprint as that of the first data flow are found, determining may be performed for each data flow, to determine whether the data flow is NAT-associated with the first data flow.

For multi-level NAT, translation and transmission delays of the multi-level NAT are small, and an absolute value of a time difference between the setup time of the first data flow and setup time of a data flow after multi-level NAT is less than a specified threshold. Therefore, whether the two data flows are NAT-associated can be accurately determined by using the foregoing solution.

A problem of synchronization precision exists during collection by collectors on different network nodes, and a transmission delay further exists between different collectors. Therefore, the foregoing threshold may be determined based on the time synchronization precision and/or the transmission delay.

In some possible implementations, one or more NAT-associated data flows travel a short distance, and have a low transmission delay. In this case, the threshold may be determined only based on the time synchronization precision of the collector. For example, none of the collectors belongs to a high-speed data center, a transmission delay between the collectors is at a microsecond level, the collectors perform synchronization according to a network time protocol (network time protocol, NTP), and the synchronization precision is at a millisecond level. Compared with the synchronization precision, the transmission delay may be ignored. Therefore, the threshold may be directly determined based on the synchronization precision. For example, the threshold may be 10 milliseconds or the like. For another example, when the synchronization precision between the collectors is higher, the threshold may be designed to be smaller, for example, 1 millisecond or 2 milliseconds. Synchronization precision of a time synchronization protocol indicates that a time error may exist when a device in a network performs time synchronization according to the time synchronization protocol. For example, a device A and a device B perform time synchronization according to the NTP protocol. If the synchronization precision is at a millisecond level, it indicates that a time difference between the device A and the device B may be several milliseconds.

In some other possible implementations, a NAT-associated data flow has a long transmission path between collection points, and has a high transmission delay. Compared with the transmission delay, a problem of time synchronization precision may be ignored. In this case, the foregoing threshold may be determined only based on the transmission delay. For example, two collection points cross a wide area network, and a transmission delay between the collection points is about 50 ms to 60 ms, which is far beyond several milliseconds of the synchronization precision. In this case, a threshold may be directly determined based on the transmission delay, for example, the threshold is 100 ms.

In some other possible implementations of this application, a transmission delay between collection points is close to time synchronization precision. In this case, in addition to the time synchronization precision of the collectors, the transmission delay needs to be further considered, and the threshold may be determined based on the time synchronization precision and the transmission delay. For example, if the synchronization precision is at a millisecond level, and the transmission delay is also at a millisecond level, the threshold may be 20 ms.

As a network scale increases and a quantity of services deployed in the network increases, a fingerprint conflict may occur. The fingerprint conflict refers to that fingerprint features of non-NAT-associated data flows are the same. To further improve accuracy, optionally, when the NAT-associated data flow is determined, a data flow having a fingerprint conflict may be further excluded. Optionally, in this embodiment of this application, when the absolute value of the time difference between the setup time of the second data flow and the setup time of the first data flow is less than the threshold, determining that the first data flow is NAT-associated with the second data flow includes:
determining, when the absolute value of the time difference between the setup time of the second data flow and the setup time of the first data flow is less than the threshold and a fingerprint conflict does not exist between the first data flow and the second data flow, that the first data flow is NAT-associated with the second data flow, where the fingerprint conflict means that fingerprint features of non-NAT-associated data flows are the same.

For example, two data flows are not data flows in a same NAT session, but fingerprint features of the two data flows are the same. In this case, the two data flows have a fingerprint conflict.

For another example, a plurality of data flows having a same fingerprint feature as the first data flow are not data flows obtained after N-level NAT is performed on the first data flow. In this case, the plurality of data flows have a fingerprint conflict with the first data flow.

The analysis platform may perform fingerprint conflict determining on each second data flow.

For example, a manner of determining a fingerprint conflict is as follows:
determining at least one third data flow having a same second flow identifier as the second data flow;
determining at least one fourth data flow having a same fingerprint feature as each third data flow; and
determining, when an absolute value of a time difference between setup time of one fourth data flow in the at least one fourth data flow and setup time of a corresponding third data flow is less than a threshold and a second flow identifier of the fourth data flow is the same as a second flow identifier of the first data flow, that a fingerprint conflict does not exist between the first data flow and the second data flow.

A second flow identifier of a data flow may be a quadruplet, including a source IP address, a destination IP address, a destination port, and a protocol type.

This solution can determine a fingerprint conflict in a single-level NAT scenario, and can further determine a fingerprint conflict in a multi-level NAT scenario. In the foregoing process of determining a fingerprint conflict, a principle used is as follows.

A device on which a NAT function is enabled performs NAT on data flows (that is, data flows having a same quadruplet) sent from a same host to a same destination and with a same port. Therefore, whether NAT is performed on the data flows having the same quadruplet is queried in a historical record. If NAT is performed on the data flows having the same quadruplet, it is considered that NAT is also performed this time, rather than a fingerprint conflict occurs. In a multi-level NAT scenario, if multi-level NAT has been performed on the data flows having the same quadruplet in a historical record, it is considered that multi-level NAT is also performed this time. Therefore, in the foregoing determining processes, it can be determined whether each second data flow has a fingerprint conflict with or is NAT-associated with the first data flow.

When the third data flow is determined, a source port of the data flow is not limited because the second data flow and the third data flow may be data flows generated by different applications of a same host, the second data flow and the third data flow have a same destination address and port, and same NAT is performed during transmission.

For example, a data flow a is subject to NAT to obtain a data flow b, and the data flow b is subject to NAT to obtain a data flow c. In a historical record, a data flow B is obtained by performing NAT on a data flow A having a same second flow identifier as the data flow a, and a data flow C is obtained by performing NAT on the data flow B.

During data flow identification, it is determined that fingerprint features of the data flows b and c are the same as the fingerprint feature of a, and an absolute value of a time difference between setup time is also less than a threshold. In this case, fingerprint conflict determining is performed:
The first data flow is the data flow a, and the second data flow is the data flow c. It is determined that the third data flow having the same second flow identifier as the data flow c is the data flow C, and it is determined that fourth data flows having the same fingerprint feature as the data flow C are the data flow B and the data flow A.

In the fourth data flow, an absolute value of a time difference between setup time of the data flow A and setup time of the data flow C is less than a threshold, and a second flow identifier of the data flow A is the same as that of the data flow a. In this case, it is determined that no fingerprint conflict exists.

The following describes the fingerprint conflict with reference to data flow information provided in Table 2 and Table 3.

An input first data flow is flow11, and it can be found, based on fingerprint matching, that second data flows flow21 and flow31 may be NAT-associated data flows, as shown in Table 2.

**Table 2**

| | Destination IP address | Destination port | Source IP address | Source port | Setup time | Fingerprint feature |
|---|---|---|---|---|---|---|
| flow11 | 100.1.1.1 | 80 | 200.1.1.1 | 65432 | 11:24:31.312 | A |
| flow21 | 10.10.1.2 | 8080 | 10.20.1.1 | 52347 | 11:24:31.351 | A |
| flow31 | 10.10.1.3 | 8081 | 10.20.1.2 | 56475 | 11:24:31.987 | A |

Three groups of flow information may be obtained by separately querying other flows having a same second flow identifier, as shown in the following Table 3.

**Table 3**

| | Destination IP address | Destination port | Source IP address | Source port | Setup time | Fingerprint feature |
|---|---|---|---|---|---|---|
| flow11 | 100.1.1.1 | 80 | 200.1.1.1 | 65432 | 11:24:31.312 | A |
| flow12 | 100.1.1.1 | 80 | 200.1.1.1 | 76543 | 11:24:16.678 | B |
| flow13 | 100.1.1.1 | 80 | 200.1.1.1 | 63542 | 11:24:23.547 | C |
| flow21 | 10.10.1.2 | 8080 | 10.20.1.1 | 52347 | 11:24:31.351 | A |
| flow22 | 10.10.1.2 | 8080 | 10.20.1.1 | 34214 | 11:24:17.121 | B |
| flow31 | 10.10.1.3 | 8081 | 10.20.1.2 | 56475 | 11:24:31.987 | A |
| flow32 | 10.10.1.3 | 8081 | 10.20.1.2 | 43265 | 11:20:21.334 | D |

Third data flows flow22 and flow32 are respectively found based on the second data flows flow21 and flow31.

At least one fourth data flow corresponding to the third data flow flow22 is flow 12, and the third data flow flow32 has no corresponding fourth data flow.

Because the at least one fourth data flow corresponding to the third data flow flow22 is flow12, which satisfies conditions that an absolute value of a time difference between setup time is less than a threshold and that a second flow identifier of the fourth data flow is the same as the second flow identifier of the first data flow, it may be determined that a fingerprint conflict does not exist between the second data flow flow21 and the first data flow flow 11. However, a fingerprint conflict exists between the second data flow flow31 and the first data flow flow11.

Optionally, the analysis platform may be a network diagnosis device, and correspondingly, the method further includes:
S48: When the first data flow is faulty, the analysis platform performs fault diagnosis on the first data flow and at least one data flow NAT-associated with the first data flow.

For example, after determining that the first data flow has a fault of a high packet loss rate or delay, a fault diagnosis device first determines the at least one second data flow NAT-associated with the first data flow, then analyzes a reason of the high packet loss rate or delay for the first data flow and the at least one second data flow, determines a fault point that causes the packet loss or delay on a link, and completes fault diagnosis.

In some scenarios, the network diagnosis device determines, based on an ACK packet of a data packet, that the first data flow has a packet loss but a location of the packet loss is not in a link that the first data flow passes through. In this case, the network diagnosis device performs fault diagnosis on the first data flow and the second data flow, determines that the location of the packet loss is in a link that the second data flow passes through, and determines a location of a fault point that causes the packet loss. In this way, a network fault can be located or demarcated more accurately.

In some other scenarios, the network diagnosis device finds that a transmission delay of a data packet of the first data flow is high. In this case, the network diagnosis device performs fault diagnosis on the first data flow and the second data flow, and determines that a location of a fault point that causes the transmission delay is on a link in which the second data flow is located. In this way, a network fault can be located or demarcated more accurately.

In this embodiment of this application, fault diagnosis is performed by using a data flow as a granularity. A reason is that, in some scenarios, a packet loss or a transmission delay of a data packet is caused because a device on the link in which the second data flow is located performs rate limitation on burst traffic of the data flow. In this case, another data flow on the link is not involved, and diagnosis by using the data flow as the granularity is more accurate.

It can be learned that a NAT-associated data flow can be determined by using the data flow identification solution provided in this application, so that the analysis platform can perform fault diagnosis on an original data flow, and can continue to perform fault diagnosis on the NAT-associated data flow. In this way, a network fault can be located or demarcated more accurately.

Optionally, when it is determined that no data flow NAT-associated with the first data flow exists, it may be determined that no data flow belonging to the same NAT session as that of the first data flow exists. Optionally, when it is determined that no data flow NAT-associated with the first data flow exists, the method further includes:
The analysis platform performs fault diagnosis on the first data flow when the first data flow is faulty.

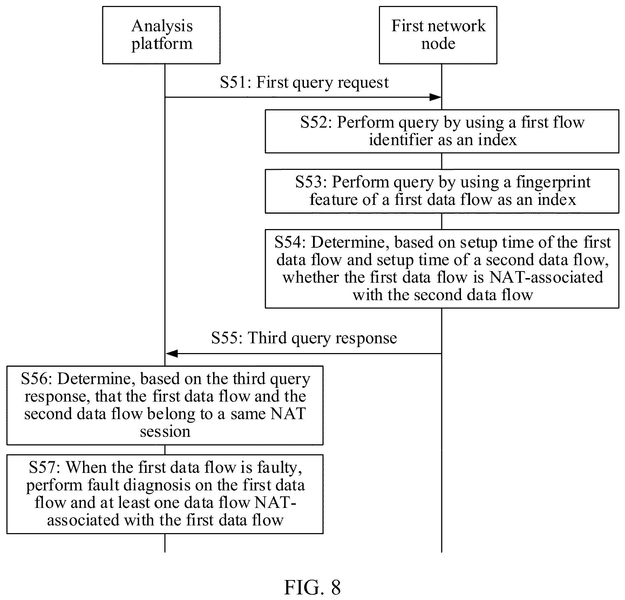

FIG. 8 is a flowchart of a data flow identification method according to an embodiment of this application. An example in which the method is jointly performed by an analysis platform, a first network node, and a second network node is used for description. For example, the first network node is a storage platform. As shown in FIG. 8, the method includes the following steps.

S51: An analysis platform sends a first query request to the first network node, where the first query request includes a first flow identifier of a first data flow; and the first network node receives the first query request.

S52: The first network node performs query by using the first flow identifier as an index. When a result is found, a fingerprint feature and setup time of the first data flow are obtained, and then S53 is performed; otherwise, subsequent steps are not performed.

Optionally, when no result is found, the method may further include: The first network node feeds back a query failure message to the analysis platform, to notify the analysis platform that no result is found.

S53: The first network node performs query by using the fingerprint feature of the first data flow as an index. When a result is found, a first flow identifier and setup time of a second data flow having a same fingerprint feature as the first data flow are obtained, and then S54 is performed; otherwise, subsequent steps are not performed.

Optionally, when no result is found, the method may further include: The first network node feeds back a query failure message to the analysis platform, to notify the analysis platform that no result is found.

S54: The first network node determines, based on the setup time of the first data flow and setup time of the second data flow, whether the first data flow is NAT-associated with the second data flow. When it is determined that the first data flow is NAT-associated with the second data flow, S55 is performed; otherwise, subsequent steps are not performed.

It is determined, when an absolute value of a time difference between the setup time of the second data flow and the setup time of the first data flow is less than a threshold, that the first data flow is NAT-associated with the second data flow. Otherwise, it is determined that the first data flow is not NAT-associated with the second data flow.

Optionally, in this embodiment of this application, when the absolute value of the time difference between the setup time of the second data flow and the setup time of the first data flow is less than the threshold, the determining that the first data flow is NAT-associated with the second data flow includes:
determining, when the absolute value of the time difference between the setup time of the second data flow and the setup time of the first data flow is less than the threshold and a fingerprint conflict does not exist between the first data flow and the second data flow, that the first data flow is NAT-associated with the second data flow, where the fingerprint conflict means that fingerprint features of non-NAT-associated data flows are the same.

For a detailed process of determining a fingerprint conflict, refer to step S47. Details are not described herein again.

Optionally, when it is determined that the first data flow is not NAT-associated with the second data flow, the method may further include: The first network node feeds back a notification message to the analysis platform, to notify the analysis platform that there is no data flow NAT-associated with the first data flow.

S55: The first network node sends a third query response to the analysis platform, where the third query response includes the first flow identifier of the second data flow that is NAT-associated with the first data flow; and the analysis platform receives the third query response.

S56: The analysis platform determines, based on the third query response, that the first data flow is NAT-associated with the second data flow.

S57: When the first data flow is faulty, the analysis platform performs fault diagnosis on the first data flow and the at least one data flow NAT-associated with the first data flow.

For a detailed process of step S57, refer to step S48.

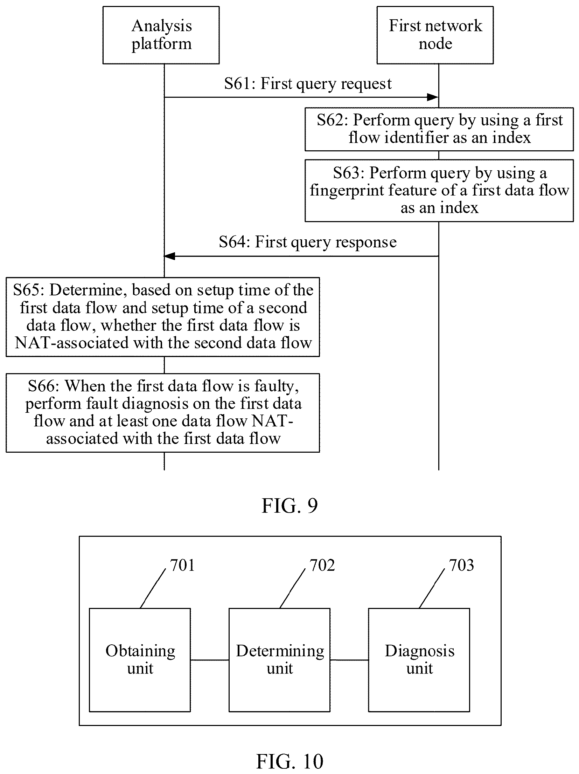

FIG. 9 is a flowchart of a data flow identification method according to an embodiment of this application. An example in which the method is jointly performed by an analysis platform and a first network node is used for description. For example, the first network node is a storage platform. As shown in FIG. 9, the method includes the following steps.

S61: An analysis platform sends a first query request to the first network node, where the first query request includes a first flow identifier of a first data flow; and the first network node receives the first query request.

S62: The first network node performs query by using the first flow identifier as an index. When a result is found, a fingerprint feature and setup time of the first data flow are obtained, and then S63 is performed; otherwise, subsequent steps are not performed.

S63: The first network node performs query by using the fingerprint feature of the first data flow as an index. When a result is found, a first flow identifier and setup time of a second data flow having a same fingerprint feature as the first data flow are obtained, and then S64 is performed; otherwise, subsequent steps are not performed.

Optionally, when no result is found, the method may further include: The first network node feeds back a query failure message to the analysis platform, to notify the analysis platform that no result is found.

S64: The first network node sends a first query response to the analysis platform, where the first query response includes the fingerprint feature and the setup time of the first data flow, and the first flow identifier and the setup time of the second data flow having the same fingerprint feature as the first data flow; and the analysis platform receives the first query response.

S65: The analysis platform determines, based on the setup time of the first data flow and setup time of the second data flow, whether the first data flow is NAT-associated with the second data flow.

It is determined, when an absolute value of a time difference between the setup time of the second data flow and the setup time of the first data flow is less than a threshold, that the first data flow is NAT-associated with the second data flow. Otherwise, it is determined that the first data flow is not NAT-associated with the second data flow.

Optionally, in this embodiment of this application, when the absolute value of the time difference between the setup time of the second data flow and the setup time of the first data flow is less than the threshold, the determining that the first data flow is NAT-associated with the second data flow includes:
determining, when the absolute value of the time difference between the setup time of the second data flow and the setup time of the first data flow is less than the threshold and a fingerprint conflict does not exist between the first data flow and the second data flow, that the first data flow is NAT-associated with the second data flow, where the fingerprint conflict means that fingerprint features of non-NAT-associated data flows are the same.

For a detailed process of determining a fingerprint conflict, refer to step S47. Details are not described herein again.

S66: When the first data flow is faulty, the analysis platform performs fault diagnosis on the first data flow and at least one data flow NAT-associated with the first data flow.

For a detailed process of step S66, refer to step S48.

FIG. 10 is a block diagram of a data flow identification apparatus according to an embodiment of this application. The data flow identification apparatus may be implemented as all or a part of an analysis platform, a network device, a collector, or a storage platform by using software, hardware, or a combination thereof. The data flow identification apparatus may include an obtaining unit 701 and a determining unit 702.

The obtaining unit 701 is configured to obtain a fingerprint feature and setup time of a first data flow.

The determining unit 702 is configured to determine, based on the fingerprint feature and the setup time of the first data flow, at least one data flow NAT-associated with the first data flow.

Optionally, the obtaining unit 701 is configured to: send a first query request to a first network node, where the first query request includes a first flow identifier of the first data flow; and receive a first query response sent by the first network node, where the first query response includes the fingerprint feature and the setup time of the first data flow.

Optionally, the determining unit 702 is configured to: send a second query request to a second network node, where the second query request includes the fingerprint feature of the first data flow; receive a second query response sent by the second network node, where the second query response includes a first flow identifier and setup time of a second data flow having a same fingerprint feature as the first data flow; and determine, when an absolute value of a time difference between the setup time of the second data flow and the setup time of the first data flow is less than a threshold, that the first data flow is NAT-associated with the second data flow.

Optionally, the first query response further includes a first flow identifier and setup time of a second data flow having a same fingerprint feature as the first data flow.

The determining unit 702 is configured to determine, when an absolute value of a time difference between setup time of the second data flow and the setup time of the first data flow is less than a threshold, that the first data flow is NAT-associated with the second data flow.

Optionally, the obtaining unit 701 is configured to: receive a first query request, where the first query request includes a first flow identifier of the first data flow; and determine the fingerprint feature and the setup time of the first data flow based on the first flow identifier of the first data flow.

Optionally, the determining unit 702 is configured to: determine a second data flow based on the fingerprint feature of the first data flow, where a fingerprint feature of the second data flow is the same as the fingerprint feature of the first data flow; and determine, when an absolute value of a time difference between setup time of the second data flow and the setup time of the first data flow is less than a threshold, that the first data flow is NAT-associated with the second data flow.

Optionally, the fingerprint feature includes at least one of the following features:
an internet protocol identifier IPID of a first data packet, a payload of the first data packet, a hash value of the payload of the first data packet, an **IPID** of an SYN packet in a transmission control protocol TCP three-way handshake process, an initial sequence number ISN of the SYN packet in the TCP three-way handshake process, and an ISN of an SYN-ACK packet in the TCP three-way handshake process.

Optionally, the first query request further includes a query time range, and the query time range is used to limit a time range of setup time of a found data flow.

Optionally, the determining unit 702 is configured to determine, when the absolute value of the time difference between the setup time of the second data flow and the setup time of the first data flow is less than the threshold and a fingerprint conflict does not exist between the first data flow and the second data flow, that the first data flow is NAT-associated with the second data flow, where the fingerprint conflict means that fingerprint features of non-NAT-associated data flows are the same.

Optionally, the determining unit 702 is further configured to: determine at least one third data flow having a same second flow identifier as the second data flow; determine at least one fourth data flow having a same fingerprint feature as each third data flow; and determine, when an absolute value of a time difference between setup time of one fourth data flow in the at least one fourth data flow and setup time of a corresponding third data flow is less than a threshold and a second flow identifier of the fourth data flow is the same as a second flow identifier of the first data flow, that a fingerprint conflict does not exist between the first data flow and the second data flow.

Optionally, the apparatus further includes:
a diagnosis unit 703, configured to: when the first data flow is faulty, perform fault diagnosis on the first data flow and the at least one data flow NAT-associated with the first data flow.

It should be noted that, when the data flow identification apparatus provided in the foregoing embodiment performs data flow identification, division of the foregoing functional units is merely used as an example for description. In actual application, the foregoing functions may be allocated to different functional units for implementation as required. To be specific, an internal structure of a device is divided into different functional units to implement all or some of the functions described above. In addition, the data flow identification apparatus provided in the foregoing embodiment and the data flow identification method embodiment belong to a same concept. For a specific implementation process of the data flow identification apparatus provided in the foregoing embodiment, refer to the method embodiment, and details are not described herein again.

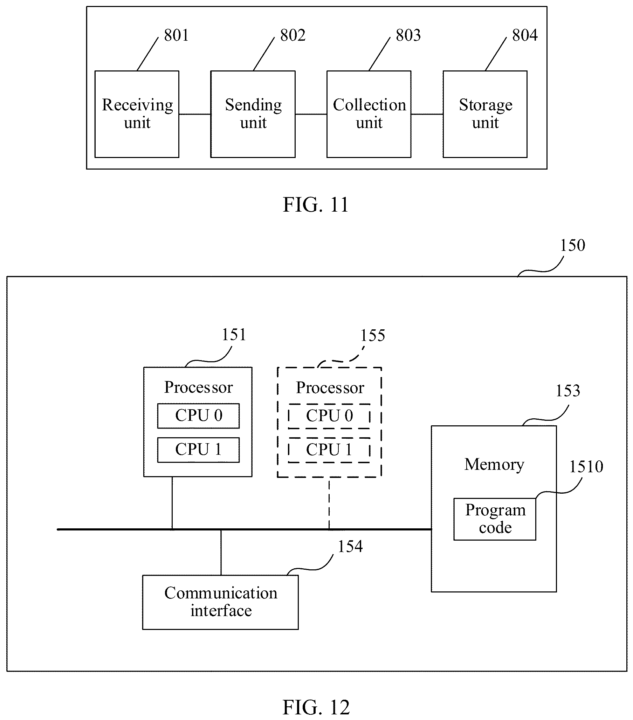

FIG. 11 is a block diagram of a data flow identification apparatus according to an embodiment of this application. The display apparatus may be implemented as all or a part of a collector, a network device on which a collector is deployed, or a storage platform by using software, hardware, or a combination thereof. The display apparatus may include a receiving unit 801 and a sending unit 802.

The receiving unit 801 is configured to receive a query request, where the query request includes a first flow identifier of a first data flow.

The sending unit 802 is configured to send a query response, where the query response includes a fingerprint feature and setup time of the first data flow, and the fingerprint feature and the setup time of the first data flow are used to determine at least one data flow NAT-associated with the first data flow.

Optionally, the query response further includes a first flow identifier and setup time of a second data flow having a same fingerprint feature as the first data flow.

Optionally, the apparatus further includes:
a collection unit 803, configured to collect setup time, a first flow identifier, and a fingerprint feature of each data flow; and
a storage unit 804, configured to store the setup time, the first flow identifier, and the fingerprint feature of each data flow.

Optionally, the collection unit 803 is configured to: capture a packet of a data flow through a mirroring function; and analyze the captured packet of the data flow, to obtain setup time, a first flow identifier, and a fingerprint feature of the data flow.

It should be noted that, when the data flow identification apparatus provided in the foregoing embodiment performs data flow identification, division of the foregoing functional units is merely used as an example for description. In actual application, the foregoing functions may be allocated to different functional units for implementation as required. To be specific, an internal structure of a device is divided into different functional units to implement all or some of the functions described above. In addition, the data flow identification apparatus provided in the foregoing embodiment and the data flow identification method embodiment belong to a same concept. For a specific implementation process of the data flow identification apparatus provided in the foregoing embodiment, refer to the method embodiment, and details are not described herein again.

The foregoing descriptions of procedures corresponding to accompanying drawings have respective focuses. For a part of a procedure that is not described in detail, refer to related descriptions of another procedure.

FIG. 12 is a diagram of a structure of an electronic device 150 according to an embodiment of this application. The electronic device may be an analysis platform, a network device, a collector, or a storage platform. The electronic device 150 shown in FIG. 12 is configured to perform operations related to the data flow identification method shown in any one of FIG. 4 to FIG. 9. The electronic device 150 may be implemented by using a general bus architecture.

As shown in FIG. 12, the electronic device 150 includes at least one processor 151, a memory 153, and at least one communication interface 154.

The processor 151 is, for example, a general-purpose central processing unit (central processing unit, CPU), a digital signal processor (digital signal processor, DSP), a network processor (network processor, NP), a data processing unit (Data Processing Unit, DPU), a microprocessor, or one or more integrated circuits configured to implement the solutions of this application. For example, the processor 151 includes an application-specific integrated circuit (application-specific integrated circuit, ASIC), a programmable logic device (programmable logic device, PLD), or another programmable logic device, a transistor logic device, a hardware component, or any combination thereof. The PLD is, for example, a complex programmable logic device (complex programmable logic device, CPLD), a field programmable logic gate array (field programmable gate array, FPGA), a generic array logic (generic array logic, GAL), or any combination thereof. The processor may implement or execute various logical blocks, modules, and circuits described with reference to content disclosed in embodiments of this application. The processor may alternatively be a combination of processors implementing a computing function, for example, a combination of one or more microprocessors, or a combination of a DSP and a microprocessor.

Optionally, the electronic device 150 further includes a bus. The bus is configured to transmit information between components of the electronic device 150. The bus may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For ease of representation, only one thick line is used to represent the bus in FIG. 12, but this does not mean that there is only one bus or only one type of bus.

The memory 153 is, for example, a read-only memory (read-only memory, ROM) or another type of static storage device that can store static information and instructions, for another example, a random access memory (random access memory, RAM) or another type of dynamic storage device that can store information and instructions, for another example, an electrically erasable programmable read-only memory (electrically erasable programmable read-only Memory, EEPROM), a compact disc read-only memory (compact disc read-only memory, CD-ROM) or another compact disc storage, an optical disk storage (including a compact disc, a laser disc, an optical disc, a digital versatile disc, a Blu-ray disc, and the like), a magnetic disk storage medium or another magnetic storage device, or any other medium that can be used to carry or store expected program code in a form of an instruction or a data structure and that can be accessed by a computer, but are not limited thereto. For example, the memory 153 exists independently, and is connected to the processor 151 through the bus. The memory 153 may alternatively be integrated with the processor 151.

The communication interface 154 uses any apparatus such as a transceiver, and is configured to communicate with another device or a communication network. The communication network may be an Ethernet, a radio access network (RAN), a wireless local area network (wireless local area network, WLAN), or the like. The communication interface 154 may include a wired communication interface, and may further include a wireless communication interface. Specifically, the communication interface 154 may be an Ethernet (Ethernet) interface, a fast Ethernet (Fast Ethernet, FE) interface, a gigabit Ethernet (Gigabit Ethernet, GE) interface, an asynchronous transfer mode (Asynchronous Transfer Mode, ATM) interface, a wireless local area network (wireless local area network, WLAN) interface, a cellular network communication interface, or a combination thereof. The Ethernet interface may be an optical interface, an electrical interface, or a combination thereof. In this embodiment of this application, the communication interface 154 may be used by the electronic device 150 to communicate with another device.

During specific implementation, in an embodiment, the processor 151 may include one or more CPUs, for example, a CPU 0 and a CPU 1 shown in FIG. 12. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the electronic device 150 may include a plurality of processors, for example, the processor 151 and a processor 155 shown in FIG. 12. Each of the processors may be a single-core processor (single-CPU), or may be a multi-core processor (multi-CPU). The processor herein may be one or more devices, circuits, and/or processing cores configured to process data (for example, computer program instructions).

During specific implementation, in an embodiment, the electronic device 150 may further include an output device and an input device. The output device communicates with the processor 151, and may display information in a plurality of manners. For example, the output device may be a liquid crystal display (liquid crystal display, LCD), a light emitting diode (light emitting diode, LED) display device, a cathode ray tube (cathode ray tube, CRT) display device, or a projector (projector). The input device communicates with the processor 151, and may receive an input from a user in a plurality of manners. For example, the input device may be a mouse, a keyboard, a touchscreen device, or a sensing device.

In some embodiments, the memory 153 is configured to store program code 1510 for executing the solutions of this application, and the processor 151 may execute the program code 1510 stored in the memory 153. In other words, the electronic device 150 may execute, by using the processor 151, the program code 1510 in the memory 153, to implement the data flow identification method provided in the method embodiments. The program code 1510 may include one or more software modules. Optionally, the processor 151 may also store program code or instructions for executing the solutions of this application.

In a specific embodiment, the electronic device 150 in this embodiment of this application may correspond to the controller in the foregoing method embodiments. The processor 151 in the electronic device 150 reads instructions in the memory 153, so that the electronic device 150 shown in FIG. 12 can perform all or some operations performed by the controller.

Specifically, the processor 151 is configured to: obtain a fingerprint feature and setup time of a first data flow; and determine, based on the fingerprint feature and the setup time of the first data flow, at least one data flow NAT-associated with the first data flow.

For brevity, another optional implementation is not described herein again.

Steps of the data flow identification method shown in any one of FIG. 4 to FIG. 9 are completed by using an integrated logic circuit of hardware in the processor of the electronic device 150 or by using instructions in a form of software. The steps of the method disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory. The processor reads information in the memory, and completes the steps of the foregoing methods in combination with the hardware in the processor. To avoid repetition, details are not described herein again.

An embodiment of this application further provides a chip, including an input interface, an output interface, a processor, and a memory. The input interface, the output interface, the processor, and the memory are connected through an internal connection path. The processor is configured to execute code in the memory. When the code is executed, the processor is configured to perform any one of the foregoing data flow identification methods.

It should be understood that the processor may be a CPU, or may be another general-purpose processor, a DSP, an ASIC, an FPGA or another programmable logic device, a discrete gate or a transistor logic device, a discrete hardware component, or the like. The general-purpose processor may be a microprocessor, any conventional processor, or the like. It should be noted that the processor may be a processor that supports an ARM architecture.

Further, in an optional embodiment, there are one or more processors and one or more memories. Optionally, the memory may be integrated with the processor, or the memory and the processor are separately disposed. The memory may include a read-only memory and a random access memory, and provide instructions and data to the processor. The memory may further include a non-volatile random access memory. For example, the memory may further store a reference block and a target block.

The memory may be a volatile memory or a non-volatile memory, or may include both a volatile memory and a non-volatile memory. The non-volatile memory may be a ROM, a PROM, an EPROM, an EEPROM, or a flash memory. The volatile memory may be a RAM, and is used as an external cache. By way of illustrative rather than limitative descriptions, many forms of RAMs are available, for example, an SRAM, a DRAM, an SDRAM, a DDR SDRAM, an ESDRAM, an SLDRAM, and a DR RAM.

An embodiment of this application further provides a computer-readable storage medium. The computer-readable storage medium stores computer instructions. When the computer instructions stored in the computer-readable storage medium are executed by an electronic device, the electronic device is enabled to perform the data flow identification method provided above.

An embodiment of this application further provides a computer program product including instructions. When the computer program product runs on an electronic device, the electronic device is enabled to perform the data flow identification method provided above.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer instructions. When the computer program instructions are loaded and executed on a computer, all or some of the procedures or functions according to this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium that can be accessed by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid-State Drive), or the like.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

The foregoing descriptions are merely optional embodiments of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

Unless otherwise defined, a technical term or a scientific term used herein should have a general meaning understood by a person of ordinary skill in the art of this application. In the specification and claims of this application, terms such as "first", "second", and "third" do not indicate any order, quantity, or importance, but are merely used to distinguish between different components. Similarly, "a/an", "one", or the like is not intended to indicate a quantity limitation either, but is intended to indicate existing at least one. Terms such as "include" mean that an element or object before "include" encompasses elements or objects and their equivalents listed after "include", and other elements or objects are not excluded.

The foregoing descriptions are merely embodiments of this application, but are not intended to limit this application. Any modification, equivalent replacement, or improvement made within the spirit or principle of this application should fall within the protection scope of this application.

## Claims

1. A data flow identification method, wherein the method comprises:
obtaining a fingerprint feature and setup time of a first data flow; and
determining, based on the fingerprint feature and the setup time of the first data flow, at least one data flow network address translation NAT-associated with the first data flow.

2. The method according to claim 1, wherein the obtaining a fingerprint feature and setup time of a first data flow comprises:
sending a first query request to a first network node, wherein the first query request comprises a first flow identifier of the first data flow; and
receiving a first query response sent by the first network node, wherein the first query response comprises the fingerprint feature and the setup time of the first data flow.

3. The method according to claim 1 or 2, wherein the determining, based on the fingerprint feature and the setup time of the first data flow, at least one data flow NAT-associated with the first data flow comprises:
sending a second query request to a second network node, wherein the second query request comprises the fingerprint feature of the first data flow;
receiving a second query response sent by the second network node, wherein the second query response comprises a first flow identifier and setup time of a second data flow having a same fingerprint feature as the first data flow; and
determining, when an absolute value of a time difference between the setup time of the second data flow and the setup time of the first data flow is less than a threshold, that the first data flow is NAT-associated with the second data flow.

4. The method according to claim 2, wherein the first query response further comprises a first flow identifier and setup time of a second data flow having a same fingerprint feature as the first data flow; and
the determining, based on the fingerprint feature and the setup time of the first data flow, at least one data flow NAT-associated with the first data flow comprises:
determining, when an absolute value of a time difference between the setup time of the second data flow and the setup time of the first data flow is less than a threshold, that the first data flow is NAT-associated with the second data flow.

5. The method according to claim 1, wherein the obtaining a fingerprint feature and setup time of a first data flow comprises:
receiving a first query request, wherein the first query request comprises a first flow identifier of the first data flow; and
determining the fingerprint feature and the setup time of the first data flow based on the first flow identifier of the first data flow.

6. The method according to claim 1 or 5, wherein the determining, based on the fingerprint feature and the setup time of the first data flow, at least one data flow NAT-associated with the first data flow comprises:
determining a second data flow based on the fingerprint feature of the first data flow, wherein a fingerprint feature of the second data flow is the same as the fingerprint feature of the first data flow; and
determining, when an absolute value of a time difference between setup time of the second data flow and the setup time of the first data flow is less than a threshold, that the first data flow is NAT-associated with the second data flow.

7. The method according to any one of claims 1 to 6, wherein the fingerprint feature comprises at least one of the following features:
an internet protocol identifier IPID of a first data packet, a payload of the first data packet, a hash value of the payload of the first data packet, an IPID of a synchronize sequence number SYN packet in a transmission control protocol TCP three-way handshake process, an initial sequence number ISN of the SYN packet in the TCP three-way handshake process, and an ISN of an SYN-ACK packet in the TCP three-way handshake process.

8. The method according to claim 2, 4, or 5, wherein the first query request further comprises a query time range, and the query time range is used to limit a time range of setup time of a found data flow.

9. The method according to claim 3, 4, or 6, wherein the determining, when an absolute value of a time difference between setup time of the second data flow and the setup time of the first data flow is less than a threshold, that the first data flow is NAT-associated with the second data flow comprises:
determining, when the absolute value of the time difference between the setup time of the second data flow and the setup time of the first data flow is less than the threshold and a fingerprint conflict does not exist between the first data flow and the second data flow, that the first data flow is NAT-associated with the second data flow, wherein the fingerprint conflict means that fingerprint features of non-NAT-associated data flows are the same.

10. The method according to claim 9, wherein the method further comprises:
determining at least one third data flow having a same second flow identifier as the second data flow;
determining at least one fourth data flow having a same fingerprint feature as each third data flow; and
determining, when an absolute value of a time difference between setup time of one fourth data flow in the at least one fourth data flow and setup time of a corresponding third data flow is less than a threshold and a second flow identifier of the fourth data flow is the same as a second flow identifier of the first data flow, that a fingerprint conflict does not exist between the first data flow and the second data flow.

11. The method according to any one of claims 1 to 10, wherein the method further comprises:
when the first data flow is faulty, performing fault diagnosis on the first data flow and the at least one data flow NAT-associated with the first data flow.

12. A data flow identification method, wherein the method comprises:
receiving a query request, wherein the query request comprises a first flow identifier of a first data flow; and
sending a query response, wherein the query response comprises a fingerprint feature and setup time of the first data flow, and the fingerprint feature and the setup time of the first data flow are used to determine at least one data flow NAT-associated with the first data flow.

13. The method according to claim 12, wherein the query response further comprises a first flow identifier and setup time of a second data flow having a same fingerprint feature as the first data flow.

14. The method according to claim 12 or 13, wherein the method further comprises:
collecting setup time, a first flow identifier, and a fingerprint feature of each data flow; and
storing the setup time, the first flow identifier, and the fingerprint feature of each data flow.

15. The method according to claim 14, wherein the collecting setup time, a first flow identifier, and a fingerprint feature of each data flow comprises:
capturing a packet of a data flow through a mirroring function; and
analyzing the captured packet of the data flow, to obtain setup time, a first flow identifier, and a fingerprint feature of the data flow.

16. A data flow identification apparatus, wherein the apparatus comprises:
an obtaining unit, configured to obtain a fingerprint feature and setup time of a first data flow;
and
a determining unit, configured to determine, based on the fingerprint feature and the setup time of the first data flow, at least one data flow NAT-associated with the first data flow.

17. The apparatus according to claim 16, wherein the obtaining unit is configured to: send a first query request to a first network node, wherein the first query request comprises a first flow identifier of the first data flow; and receive a first query response sent by the first network node, wherein the first query response comprises the fingerprint feature and the setup time of the first data flow.

18. The apparatus according to claim 16 or 17, wherein the determining unit is configured to: send a second query request to a second network node, wherein the second query request comprises the fingerprint feature of the first data flow; receive a second query response sent by the second network node, wherein the second query response comprises a first flow identifier and setup time of a second data flow having a same fingerprint feature as the first data flow; and determine, when an absolute value of a time difference between the setup time of the second data flow and the setup time of the first data flow is less than a threshold, that the first data flow is NAT-associated with the second data flow.

19. The apparatus according to claim 17, wherein the first query response further comprises a first flow identifier and setup time of a second data flow having a same fingerprint feature as the first data flow; and
the determining unit is configured to determine, when an absolute value of a time difference between setup time of the second data flow and the setup time of the first data flow is less than a threshold, that the first data flow is NAT-associated with the second data flow.

20. The apparatus according to claim 16, wherein the obtaining unit is configured to: receive a first query request, wherein the first query request comprises a first flow identifier of the first data flow; and determine the fingerprint feature and the setup time of the first data flow based on the first flow identifier of the first data flow.

21. The apparatus according to claim 16 or 20, wherein the determining unit is configured to: determine a second data flow based on the fingerprint feature of the first data flow, wherein a fingerprint feature of the second data flow is the same as the fingerprint feature of the first data flow; and determine, when an absolute value of a time difference between setup time of the second data flow and the setup time of the first data flow is less than a threshold, that the first data flow is NAT-associated with the second data flow.

22. The apparatus according to any one of claims 16 to 21, wherein the fingerprint feature comprises at least one of the following features:
an internet protocol identifier IPID of a first data packet, a payload of the first data packet, a hash value of the payload of the first data packet, an IPID of an SYN packet in a transmission control protocol TCP three-way handshake process, an initial sequence number ISN of the SYN packet in the TCP three-way handshake process, and an ISN of an SYN-ACK packet in the TCP three-way handshake process.

23. The apparatus according to claim 17, 19, or 20, wherein the first query request further comprises a query time range, and the query time range is used to limit a time range of setup time of a found data flow.

24. The apparatus according to claim 18, 19, or 21, wherein the determining unit is configured to determine, when the absolute value of the time difference between the setup time of the second data flow and the setup time of the first data flow is less than the threshold and a fingerprint conflict does not exist between the first data flow and the second data flow, that the first data flow is NAT-associated with the second data flow, wherein the fingerprint conflict means that fingerprint features of non-NAT-associated data flows are the same.

25. The apparatus according to claim 24, wherein the determining unit is further configured to: determine at least one third data flow having a same second flow identifier as the second data flow; determine at least one fourth data flow having a same fingerprint feature as each third data flow; and determine, when an absolute value of a time difference between setup time of one fourth data flow in the at least one fourth data flow and setup time of a corresponding third data flow is less than a threshold and a second flow identifier of the fourth data flow is the same as a second flow identifier of the first data flow, that a fingerprint conflict does not exist between the first data flow and the second data flow.

26. The apparatus according to any one of claims 16 to 25, wherein the apparatus further comprises:
a diagnosis unit, configured to: when the first data flow is faulty, perform fault diagnosis on the first data flow and the at least one data flow NAT-associated with the first data flow.

27. A data flow identification apparatus, wherein the apparatus comprises:
a receiving unit, configured to receive a query request, wherein the query request comprises a first flow identifier of a first data flow; and
a sending unit, configured to send a query response, wherein the query response comprises a fingerprint feature and setup time of the first data flow, and the fingerprint feature and the setup time of the first data flow are used to determine at least one data flow NAT-associated with the first data flow.

28. The apparatus according to claim 27, wherein the query response further comprises a first flow identifier and setup time of a second data flow having a same fingerprint feature as the first data flow.

29. The apparatus according to claim 27 or 28, wherein the apparatus further comprises:
a collection unit, configured to collect setup time, a first flow identifier, and a fingerprint feature of each data flow; and
a storage unit, configured to store the setup time, the first flow identifier, and the fingerprint feature of each data flow.

30. The apparatus according to claim 29, wherein the collection unit is configured to: capture a packet of a data flow through a mirroring function; and analyze the captured packet of the data flow, to obtain setup time, a first flow identifier, and a fingerprint feature of the data flow.

31. An electronic device, wherein the electronic device comprises a processor and a memory, the memory is configured to store a software program, and the processor runs or executes the software program stored in the memory, to enable the electronic device to implement the method according to any one of claims 1 to 15.

32. A data flow identification system, wherein the data flow identification system comprises a collector and an analysis platform, the analysis platform is configured to perform the method according to any one of claims 1 to 11, and the collector is configured to perform the method according to any one of claims 12 to 15.

33. The system according to claim 32, wherein the data flow identification system further comprises a storage platform, configured to store information about a data flow collected by the collector.

34. A computer-readable storage medium, wherein the computer-readable storage medium is used to store program code executed by a processor, and the program code comprises instructions for implementing the method according to any one of claims 1 to 15.

35. A computer program product, comprising program code, wherein when a computer runs the computer program product, the computer is enabled to perform the method according to any one of claims 1 to 15.
